# EUROPEAN PATENT APPLICATION

(11) **EP 4 578 835 A1**
(43) Date of publication of application: **02.07.2025**
(21) Application number: 24848761.3
(22) Date of filing: 28.06.2024
(51) Int. Cl.: C02F 1/40

(54) **SCUM PEELING DEVICE, WATER CONDUIT, AND SEDIMENTATION POND**

(30) Priority: 28.07.2023 JP 2023122979
(71) Applicant: Utsunomiya Kogyo Co., Ltd., Koto-ku Tokyo 136-0071 (JP)
(72) Inventor: UTSUNOMIYA, Hideo, Tokyo 136-0071 (JP)
(74) Representative: DREISS Patentanwälte PartG mbB
(86) International application number: PCT/JP2024/023527
(87) International publication number: WO 2025/028102

(57) **Abstract**

A scum peeling device includes: a pair of pipes that extend along a flow direction of raw water inside both side walls of a water conduit main body, has a plurality of opening portions provided at intervals in a length direction, and are provided to be located below scum; and a plurality of pressurized fluid supply parts that supply a pressurized fluid from a pressurized fluid supply source to the pipes, in which the pipe is divided into a plurality of regions each having a predetermined length along the flow direction of the raw water, each of the pressurized fluid supply parts is connected to each of the divided regions, and the pressurized fluid is ejected from the opening portions of the pipes, so that the scum is smoothly peeled off from the entire inner wall of the water conduit main body.

## Description

### Technical Field

The present invention relates to a scum peeling device that is provided in a water conduit and a sedimentation pond of a sewage treatment plant, and a water conduit and a sedimentation pond provided with a scum peeling device. This application claims the right of priority based on Japanese Patent Application No. 2023-122979 filed on July 28, 2023, the content of which is incorporated herein by reference.

### Background Art

A sewage treatment plant is provided with a primary sedimentation pond, which is sometimes referred to as a first sedimentation pond, for performing sedimentation separation treatment on precipitable substances in sewage accepted in the sewage treatment plant, and a final sedimentation pond, which is sometimes referred to as a second sedimentation pond, for accepting raw water obtained by performing biological treatment on treated water of the primary sedimentation pond and performing sedimentation separation treatment on activated sludge. These sedimentation ponds are configured by installing side by side a large number of sedimentation ponds. The raw water is distributed and supplied from one water conduit (sometimes referred to as an "inflow conduit") to each sedimentation pond.

The raw water flowing through the water conduit includes floating substances in addition to the precipitable substances, due to the nature of sewage. Therefore, scum in a state where the floating substances are aggregated is produced on a water surface in the water conduit. In the case of the water conduit of the primary sedimentation pond, when the thickness of the produced scum layer has reached a predetermined thickness or when a predetermined treatment time has elapsed, the removal of the scum is performed.

The scum is removed by being discharged to a scum pit (sometimes referred to as a "drainage pit") provided on a side opposite to the side where the raw water is supplied to the water conduit. The scum is discharged by opening a movable gate provided between the water conduit and the scum pit and pouring surface layer water including the scum layer into the scum pit. However, in a case where the scum is solidified or the scum is attached to an inner wall of the water conduit, the scum cannot be smoothly discharged only by the flow of the surface layer water.

Therefore, in PTL 1, the applicant of the present application has previously proposed a water conduit that can efficiently discharge scum to a scum pit. The water conduit according to this proposal includes a water injection nozzle that is provided above the scum and ejects pressurized water to push the scum to a scum pit side, an ejection nozzle that is provided in water located below the scum and ejects pressurized water to push the scum to the scum pit side, and a compressed air ejection mechanism that is provided on the inner wall of the water conduit and ejects compressed air along the inner wall to peel off the scum from the inner wall.

In the water conduit according to the proposal, since the pressurized water is ejected from above and below the scum to push the scum to the scum pit side and the scum is peeled off from the inner wall, there is a feature that the scum can be smoothly discharged to the scum pit.

### Citation List

### Patent Literature

[PTL 1] Pamphlet of International Publication WO.2022/123652

### Summary of Invention

### Technical Problem

In the water conduit shown in PTL 1, since the scum is discharged to the scum pit by being accompanied with the flow of the surface layer water to remove the scum, the shorter the time required for the accompaniment, the smaller the amount of water required for the accompaniment becomes. A reduction in the amount of accompanying water directly leads to a reduction in the cost of the subsequent accompanying water treatment including the cost of power, and thus, it is desired to further shorten the accompanying time.

In order to meet the above demand, the inventor of the present invention has observed a moving state of the scum in detail, and as a result, it has been found that when the scum is attached to even a part of the inner wall of the main body of the water conduit whose length reaches several tens of meters, or when there is a portion where the peeling of the scum is delayed, the discharge time of the entire scum is increased.

Therefore, an object of the present invention is to provide a scum peeling device in which scum is smoothly peeled off from the entire inner wall of a water conduit or a sedimentation pond.

### Solution to Problem

In order to achieve the above object, according to the present invention, there is provided a scum peeling device that peels off scum attached to an inner surface of a side wall of a water conduit through which raw water flows, the scum peeling device including: a pair of pipes that extend along a flow direction of the raw water inside the side wall of the water conduit main body, have a plurality of opening portions provided at intervals in a length direction, and are provided to be located below the scum; and a plurality of pressurized fluid supply parts that supply a pressurized fluid from a pressurized fluid supply source to the pipes, in which the pipe is divided into a plurality of regions each having a predetermined length along the flow direction of the raw water, each of the pressurized fluid supply parts is connected to each of the divided regions, and the pressurized fluid is ejected from the opening portions of the pipes.

Since the pipe is divided into a plurality of regions each having a predetermined length and the pressurized fluid is supplied to each region, the pressurized fluid can be supplied uniformly over the entire length of the pipe, and the scum can be smoothly and reliably peeled off by the ejection of the pressurized fluid from the opening portion. In addition, it is also possible to supply the required pressurized fluid to the pipe in the required divided region.

The pressurized fluid is any of compressed air, pressurized water, or gas-liquid mixed pressurized water.

In the scum peeling device according to the present invention, the pressurized fluid supply part may include a pair of long pipe portions that are disposed to face the pipes in parallel, and a plurality of connection pipes that are provided at intervals in the length direction and connect the long pipe portions.

Since the pressurized fluid is supplied to the pipe through the long pipe portion, the long pipe portion functions as a header, and the pressurized fluid is filled in the long pipe portion and supplied to the pipe. Therefore, the pressurized fluid can be uniformly supplied from each part of each long pipe portion to the pipe. Since the long pipe portion is provided in each pressurized fluid supply part, it is possible to supply the pressurized fluid uniformly over the entire length of the pipe.

The scum peeling device according to the present invention may further include a pair of short pipe portions that connect end portions of both long pipe portions to each other at both end portions of the long pipe portion, in which the long pipe portions and the short pipe portions may be connected in a loop shape in the pressurized fluid supply part.

By supplying the pressurized fluid to at least one place of the loop-shaped portion, it is possible to uniformly supply the pressurized fluid to both pipes via the connection pipes.

The scum peeling device according to the present invention may further include a central connection pipe that connects midway positions in the length direction of the long pipe portions to each other, in which the pressurized fluid from the pressurized fluid supply source may be supplied to the central connection pipe.

Since the pressurized fluid is supplied to the midway position in the length direction of the long pipe portion, the pressurized fluid can be uniformly supplied to the pipe from the entire length of the long pipe portion.

In the scum peeling device according to the present invention, the midway position in the length direction of the long pipe portion may be an intermediate position in the length direction of the long pipe portion. The pressurized fluid can be more uniformly supplied.

A water conduit according to the present invention includes: the scum peeling device described above; and a water conduit main body, in which the side wall is a side wall of the water conduit main body, and at least one of an above-water nozzle that injects pressurized water, which promotes a flow of scum produced on a water surface of the raw water downstream, from above the water surface, and an underwater nozzle that injects pressurized water, which promotes the flow of the scum downstream, in underwater is provided in a plurality in the water conduit main body.

By injecting the pressurized water from the above-water nozzle to the scum floating and gathering on the water surface, in a case where the scum is solidified on the water surface, the scum can be destroyed to easily flow, and is washed away downstream as a whole, so that the scum can be easily discharged, and the scum can be reliably and smoothly discharged in combination with the action of the scum peeling device.

In addition, by causing the scum floating on the water surface to be washed away downstream from below in water by injecting the pressurized water from the underwater nozzle, the scum can be easily discharged.

In the water conduit according to the present invention, the water conduit main body includes a scum pit to which the scum on the water surface is discharged at a terminus position in the flow direction of the raw water, and an opening and closing gate that is openable to supply the raw water to a sedimentation pond at a position below the scum in the side wall.

Since most of the scum floating on the water surface can be discharged to the scum pit, the raw water from which the scum has been removed can be supplied to the sedimentation pond, and subsequent treatment can be facilitated.

### Advantageous Effects of Invention

In the scum peeling device according to the present invention, when the scum attached to the inner side wall is peeled off by ejecting the pressurized fluid from the plurality of opening portions of the pair of pipes, since the pressurized fluid is supplied to each region divided in a predetermined length of the pipe, the pressurized fluid can be supplied uniformly over the length direction of the pipe. In addition, it is also possible to supply the required pressurized fluid to the pipe in the required divided region.

Therefore, the entire scum is favorably peeled off, the scum can be smoothly discharged in a short time by the scum pit, which can significantly contribute to improvement in water quality, and the amount of water for accompanying the scum can be reduced. Therefore, it is possible to reduce the treatment cost of the treated water associated with the discharge of scum, and it is possible to significantly reduce the power consumption or the like.

### Brief Description of Drawings

Fig. 1 is a plan view showing a part of a water conduit provided with a scum peeling device according to a first embodiment of the present invention, and a sedimentation pond in a connected state to the water conduit.
Fig. 2 is a sectional view taken along line A-A of Fig. 1 and shows a state in which a movable gate is closed.
Fig. 3 is a partial sectional view taken along line A-A of Fig. 1 and shows a state in which the movable gate is opened. A pressurized fluid supply part is omitted.
Fig. 4 is an enlarged plan view of a scum peeling device portion in the first embodiment of the present invention.
Fig. 5 is a partially enlarged view of a pipe and a discharge port member along line B-B of Fig. 4.
Fig. 6 is an enlarged plan view similar to Fig. 4, showing a second embodiment of the pressurized fluid supply part of the scum peeling device according to the present invention.
Fig. 7 is an enlarged plan view similar to Fig. 4, showing a third embodiment of the pressurized fluid supply part of the scum peeling device according to the present invention.

### Description of Embodiments

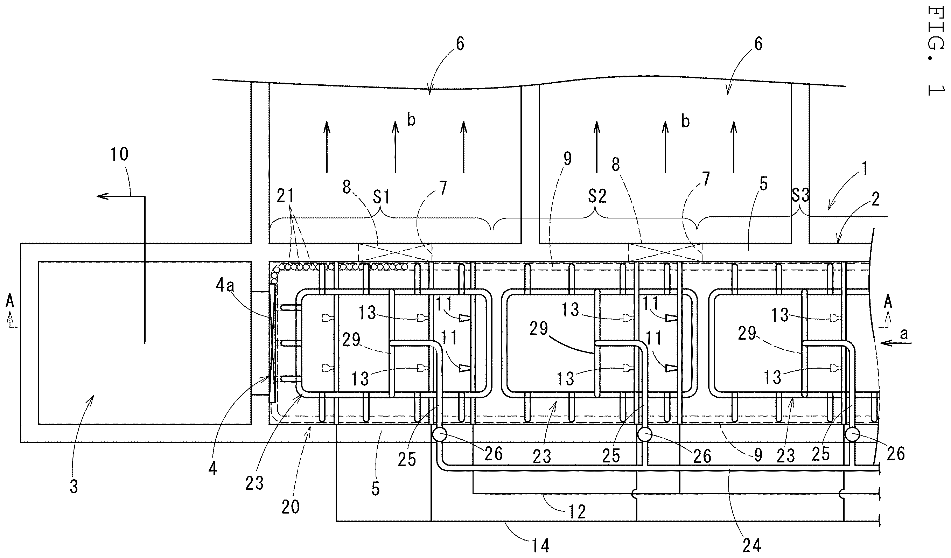

Hereinafter, embodiments of the present invention will be described. A water conduit 1 of a first embodiment is for a primary sedimentation pond and includes a water conduit main body 2 and a scum pit 3 in a connected state to the water conduit main body 2. The water conduit main body 2 is a long water channel of an upper open type, and is configured such that raw water made of sewage is supplied from one end side (in the example shown in Fig. 1, a right end side) in a longitudinal direction thereof (a flow direction of the raw water) (refer to an arrow a).

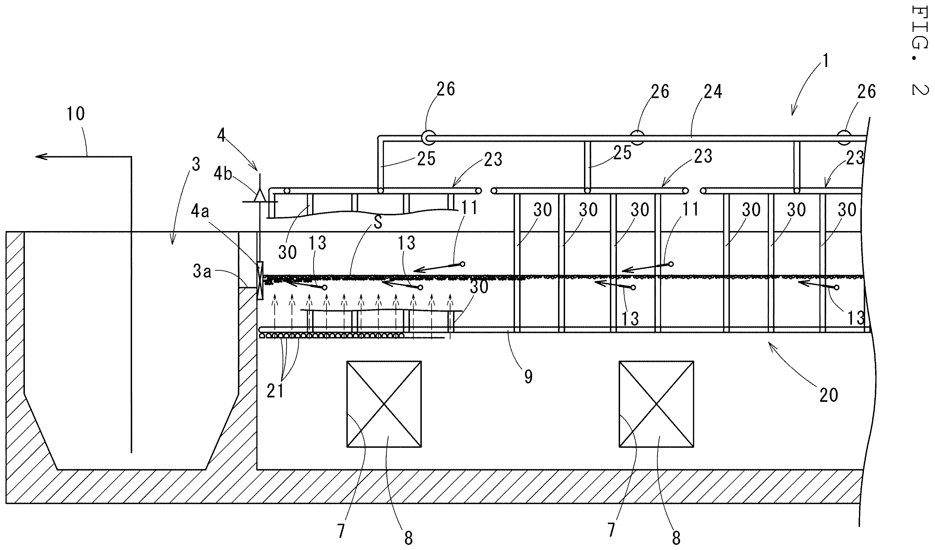

The scum pit 3 is provided on a terminus side (in the example shown in Fig. 1, a left end side) of the water conduit main body 2 in the flow direction of the raw water (the longitudinal direction of the water conduit main body 2). A part of a wall X forming the scum pit 3 is shared with a wall forming a terminus of the water conduit main body 2. The height of an upper wall surface 3a of the shared wall X is determined to be lower than a water surface in the water conduit main body 2 (refer to Fig. 2).

A movable gate 4 is provided on the water conduit main body 2 side of the wall X, and the movable gate 4 is configured to control inflow of the raw water and scum S from the water conduit main body 2 to the scum pit 3. For convenience of description, the scum S that has grown to a certain thickness on the water surface is sometimes referred to as a "scum layer S".

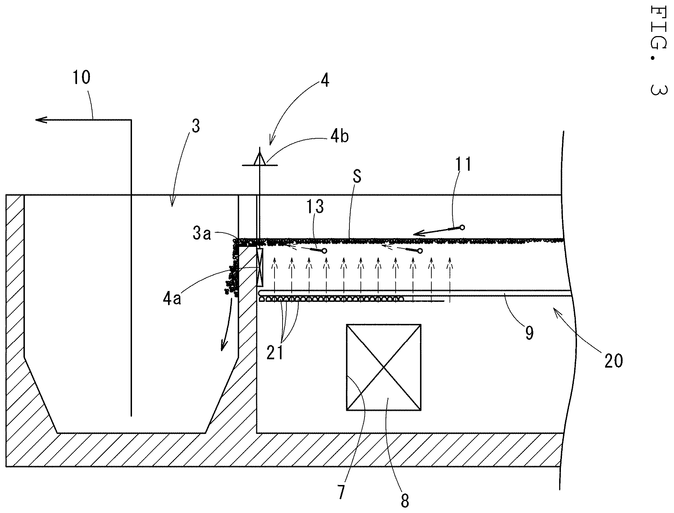

The movable gate 4 includes a gate plate 4a and a drive mechanism 4b**,** and is configured to be closed as shown in Fig**.** 2 when the scum S is not discharged from the main body 2 into the scum pit 3, and to be opened as shown in Fig. 3 when the scum S is discharged from the water conduit main body 2 into the scum pit 3. When the movable gate 4 is opened as shown in Fig. 3, the surface layer water of the water conduit main body 2, that is, the raw water containing the scum S can be discharged into the scum pit 3.

The width of the gate plate 4a is slightly smaller than the water channel width of the water conduit main body 2, and the height thereof is sufficiently larger than the difference between the position of the upper wall surface 3a and the water surface position in the water conduit main body 2. As the drive mechanism 4b, a well-known vertical movement mechanism such as a type composed of a screw rod and a rotary nut, a rack-and-pinion type, or a hydraulic type is adopted to be capable of moving the gate plate 4a up and down.

When the raw water (scum S) is not discharged, the drive mechanism 4b raises the gate plate 4a such that the upper end position of the gate plate 4a is sufficiently higher than the water surface position in the water conduit main body 2 as shown in Fig. 2, thereby blocking communication between the scum pit 3 and the water conduit main body 2. When discharging the scum S, the drive mechanism 4b causes the scum pit 3 and the water conduit main body 2 to communicate with each other by lowering the gate plate 4a such that the upper end position of the gate plate 4a is lower than the water surface position in the water conduit main body 2 and is slightly lower than the bottom surface position of the scum layer S produced in the water conduit main body 2, as shown in Fig. 3**.**

The scum pit 3 is provided with a scum discharge device 10 for discharging accumulated scum S from the scum pit 3.

A plurality of sedimentation ponds 6 corresponding to a primary sedimentation pond of a sewage treatment plant are installed side by side outside one side wall (a side wall on an upper side in Fig. 1) 5 out of a pair of side walls 5 in the longitudinal direction of the long water channel forming the water conduit main body 2.

A part of a peripheral wall of each sedimentation pond 6 is shared with the side wall 5 of the water conduit main body 2, and an inflow port 7 and an opening and closing gate 8 leading to each sedimentation pond 6 are provided at a midway position of the depth thereof. The inside of the water conduit main body 2 and the inside of each sedimentation pond 6 communicate with each other via each inflow port 7.

When the opening and closing gate 8 of the inflow port 7 is opened, the raw water in the water conduit main body 2 flows into the sedimentation pond 6 and can flow in a direction away from the side wall 5 (refer to an arrow b of Fig. 1) within the sedimentation pond 6. In the example shown in Fig. 1, the sedimentation ponds 6 are installed side by side outside one side wall 5 of the water conduit main body 2, but may be installed side by side outside both side walls 5.

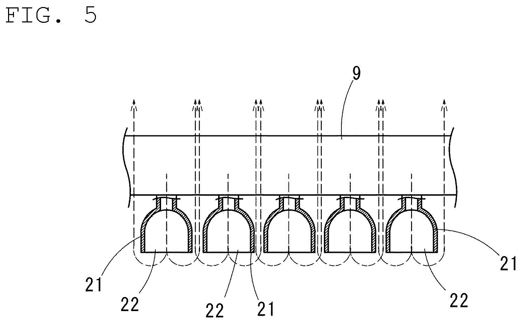

A pair of pipes 9 configuring a part of the scum peeling device 20 are provided on the inner sides of both side walls 5 of the water conduit main body 2 in parallel with each side wall 5 to extend along the flow direction of the raw water. Each pipe 9 is made of a well-known pipe material such as steel or synthetic resin, and as shown in Fig. 5, a large number of discharge port members 21 are provided in a row at predetermined intervals in a length direction thereof. The discharge port member 21 is made of synthetic resin such as fluorine resin, and an outer shape thereof is formed in a cup shape (bowl shape, bell shape, or the like) having an opening portion 22 at a lower portion. The discharge port member 21 is fixed to the pipe 9 in a state where an internal space thereof communicates with the inside of the pipe 9, and the opening portion 22 is disposed vertically downward.

The pipes 9 are installed to be located below the scum layer S produced in the water conduit main body 2. For example, in a case where setting is made to discharge the scum S from the water conduit main body 2 into the scum pit 3 when the scum S is retained and grows to a certain thickness due to the operation of the water conduit 1, the pipe 9 is installed to be located slightly lower than 10 cm from the water surface. The installation position of the pipe 9 varies depending on the sewage treatment plant where the water conduit main body 2 is installed. However, in any case, the installation position is determined to be below the produced scum S.

The scum peeling device 20 includes the pipe 9 described above, and a plurality of pressurized fluid supply parts 23 that supply a pressurized fluid such as compressed air, pressurized water, or gas-liquid mixed pressurized water to each pipe 9. Here, compressed air is used as an example of the pressurized fluid.

Each pipe 9 is provided along the length direction of the water conduit main body 2 (along the flow direction of raw water). The inside of the water conduit main body 2 is divided into a plurality of regions (regions S1 to S3 in Fig. 1) each having a predetermined length along the length direction thereof. The pressurized fluid supply part 23 is provided for each of the divided regions S1 to S3**.** Therefore, a plurality of pressurized fluid supply parts 23 are provided within one water conduit main body 2.

In the example shown in Fig. 1**,** the inside of the water conduit main body 2 is divided into three regions S1 to S3**,** and accordingly, three pressurized fluid supply parts 23 are respectively provided in the three regions S1 to S3 (however, in Fig. 3, the pressurized fluid supply parts 23 are not shown). A pressurized fluid pipe 24 that supplies a pressurized fluid from a pressure supply source (not shown) is connected to each pressurized fluid supply part 23 via a branch pipe 25**.** Each branch pipe 25 is provided with a flow rate regulating valve 26 for controlling a flow rate to each pressurized fluid supply part 23**.**

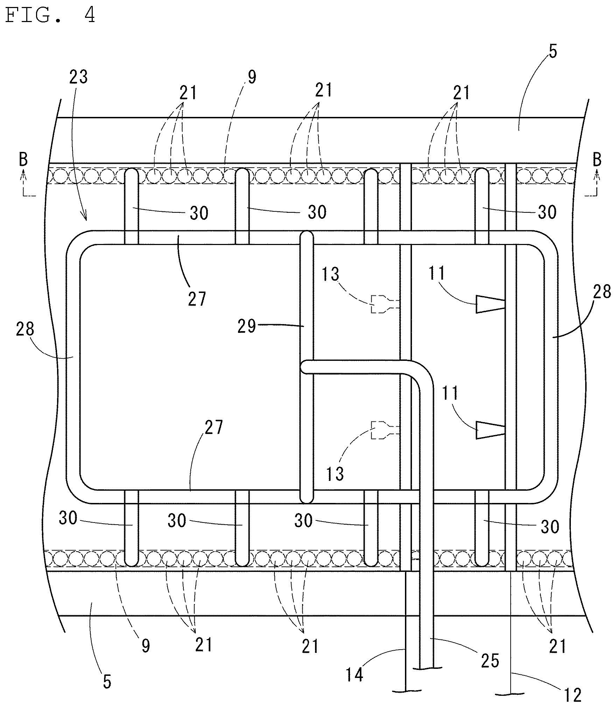

As shown in Fig. 4, each pressurized fluid supply part 23 is configured to form a single loop shape in a plan view by a pair of long pipe portions 27 and 27 provided to be disposed in parallel to each of the pair of pipes 9 and 9 and a pair of short pipe portions 28 and 28 provided to connect both end portions of the pair of long pipe portions 27 and 27 to each other.

A central connection pipe 29 that connects both the long pipe portions 27 and 27 is connected to substantially the central position of each of the pair of long pipe portions 27 and 27. Therefore, the planar shape of each pressurized fluid supply part 23 has a character "day" of a Chinese character, θ (Greek letter), or a 7-segment display shape. The branch pipe 25 from the pressurized fluid pipe 24 is connected to the central position in the length direction of the central connection pipe 29.

A plurality of connection pipes 30, each of which connects each of the long pipe portions 27 and 27 to each of the pipes 9 and 9, are provided in the pair of long pipe portions 27 and 27 of the pressurized fluid supply part 23 while maintaining a predetermined interval therebetween. Therefore, the pressurized fluid from the pressurized fluid supply source is supplied to each pressurized fluid supply part 23 from the pressurized fluid pipe 24 through each branch pipe 25, and is supplied from the long pipe portion 27 to each pipe 9 through the connection pipe 30 in each pressurized fluid supply part 23.

Each pressurized fluid supply part 23, the pressurized fluid pipe 24, and the branch pipe 25 are provided at positions above the water surface of the water conduit main body 2. These can also be disposed in water. However, since the flow of raw water is hindered, it is preferable to dispose them above the water surface. In the drawings, the pipe 9 and the like shown by a broken line indicate that the pipe 9 and the like are provided in water.

When the pressurized fluid (compressed air) is supplied into the pipes 9 and 9, air bubbles are released into the raw water from the downward opening portion 22 of the discharge port member 21. Then, the released air bubbles rise along the inner surface of the side wall 5, and the scum attached to the side wall 5 can be peeled off.

Instead of the pipe 9 and the discharge port member 21, a pipe made of an elastic material such as natural rubber or synthetic rubber, in which a large number of slits (opening portions) are provided at intervals in the length direction, a steel pipe in which a large number of holes (opening portions) are provided at intervals in the length direction, or the like can also be adopted.

Further, a plurality of water injection nozzles (above-water nozzles) 11 are provided in the water conduit main body 2. The water injection nozzles 11 are provided at a plurality of locations slightly above the water surface in the water conduit main body 2 to divide the length in the flow direction of the water in the water conduit main body 2 at predetermined intervals, and at a plurality of locations in a width direction of the water conduit main body 2.

The water injection nozzle 11 may be omitted in a case where the water conduit 1 is for a final sedimentation pond. Whether or not to install the water injection nozzle 11 is determined by the properties of the scum produced in the water conduit 1, and the water injection nozzle 11 is omitted in a case where the scum can be moved even without water injection from the water injection nozzle 11, in a case where the scum is adversely affected by water injection, or the like.

Water having a predetermined pressure is supplied to each water injection nozzle 11 via a pressurized water supply pipe 12. As the water that is supplied to the water injection nozzle 11, treated water of a sewage treatment plant can be used.

The water injection nozzle 11 is obliquely provided in a direction that is obliquely downward, with a tip opening of the water injection nozzle 11 facing a downstream side of the flow of the water in the water conduit main body 2. Therefore, when the pressurized water is injected from the water injection nozzle 11, the injected water is supplied to the scum S (scum layer S) formed in a layer shape on the water surface of the water conduit main body 2 toward the downstream side, and the flow of the scum S that is to flow toward the scum pit 3 is promoted (refer to Fig. 3).

Further, the water conduit main body 2 is provided with a plurality of water injection nozzles (underwater nozzles) 13 to be disposed in water. The water injection nozzles 13 are provided in water slightly below the water surface in the water conduit main body 2 and at predetermined intervals in the flow direction of the water in the water conduit main body 2. In addition, a plurality of (in the example shown in Fig. 1, two) water injection nozzles 13 are provided at predetermined intervals in a direction orthogonal to the flow direction of the water in the water conduit main body 2, that is, with respect to the water channel width.

Water having a predetermined pressure is also supplied to the water injection nozzle 13 through a pressurized water supply pipe 14. When the pressurized water is supplied from the pressurized water supply pipe 14 to the water injection nozzle 13, the pressurized water is ejected from an opening facing the scum pit 3 side, and the flow of the scum S that is to flow toward the scum pit 3 is promoted (refer to Fig. 3). The treated water of the sewage treatment plant can also be used as the water that is supplied to the water injection nozzle 13.

In the following description, the water injection nozzle 11 that is installed on water will be referred to as an above-water nozzle, and the water injection nozzle 13 that is installed in water will be referred to as an underwater nozzle.

A sewage treatment method including a scum discharging operation of the water conduit 1 having the above-described configuration will be described.

When raw water (sewage) is supplied to the water conduit main body 2, the raw water is distributed and supplied from the water conduit main body 2 to each sedimentation pond 6 through the inflow port 7 provided to correspond to each sedimentation pond 6. The sedimentation separation treatment is performed in each of the sedimentation ponds 6, and the scum S is gradually produced on the water surface of the water conduit main body 2. Fig. 2 shows this state.

At a point in time when the production of the scum S in the water conduit main body 2 progresses to a certain extent to form a layer shape and the thickness of the scum S reaches a certain extent, the pressurized water is supplied to the underwater nozzle 13 and the above-water nozzle 11, a part of the scum layer S is pushed toward the downstream side while being destroyed, and the compressed air is supplied to the pipe 9. In this way, the discharge operation of the scum S to the scum pit 3 is started.

When the pressurized water is supplied to the underwater nozzle 13, the pressurized water is ejected from the underwater nozzle 13 such that the scum S flows toward the scum pit 3 side. Since the tip side of the underwater nozzle 13 is formed to be slightly upward, the scum S is acted to be slightly lifted from the underwater, and the movement of the scum S is performed. At the same time, the pressurized water is also ejected from the above-water nozzle 11 such that the scum S flows toward the scum pit 3 side.

When the discharge operation of the scum is started, the compressed air is also ejected from the pipe 9, and the scum S attached to the side wall 5 is peeled off by the compressed air. In this way, the scum S is more smoothly and quickly discharged to the scum pit 3. Fig. 3 shows this state.

The ejection of the compressed air from the pipe 9 will be further described.

The compressed air (pressurized fluid) is supplied from the pressurized fluid supply part 23 to each pipe 9 provided along each side wall 5 via the connection pipe 30. In the pressurized fluid supply part 23, the pressurized fluid supplied from the branch pipe 25 to the central connection pipe 29 is sent to each of the long pipe portions 27 and 27. Since the long pipe portions 27 and 27 are formed in a loop shape together with the short pipe portions 28 and 28, the pressure inside the pressurized fluid supply part 23 is kept substantially uniform. Therefore, compressed air having substantially uniform pressure can be supplied to each pipe 9 connected to the pressurized fluid supply part 23.

In this way, substantially uniform compressed air is ejected from the opening portions 22 of all the discharge port members 21 provided in the vicinity of each side wall 5. Therefore, the scum S attached to each side wall 5 can be effectively peeled off.

In addition, the flow rate regulating valve 26 that can individually adjust the amount of compressed air that is supplied to each pressurized fluid supply part 23 is provided. Therefore, with respect to a location in the water conduit main body 2 where the scum S is likely to stay and the adhesion force is large, for example, the pressurized fluid supply part 23 provided on the terminus side of the flow in the water conduit main body 2, the amount of the compressed air that is supplied to the pressurized fluid supply part 23 is increased by the flow rate regulating valve 26, and thus the scum S at the location can be more strongly peeled off.

Therefore, the pressurized fluid can be appropriately supplied according to the adhesion state of the scum S or the like while the supply flow rate of the pressurized fluid to each pressurized fluid supply part 23 is individually controlled by the flow rate regulating valve 26, and the scum S can be effectively peeled off.

At a point in time when most of the scum S is discharged from the water conduit main body 2, the supply of the pressurized water to the underwater nozzle 13 and the above-water nozzle 11 is stopped, and the supply of the compressed air to the pipe 9 is stopped. In this way, the discharge operation of the scum S to the scum pit 3 is ended.

The above-described operation of discharging the scum S to the scum pit 3 is performed using the underwater nozzle 13 and the above-water nozzle 11. However, any one of the underwater nozzle 13 and the above-water nozzle 11 may be used. For example, in a case where the water conduit 1 is for a final sedimentation pond, the above-water nozzle 11 may be omitted. Whether to use any one or both of them is determined according to the properties, the amount, or the like of the produced scum S.

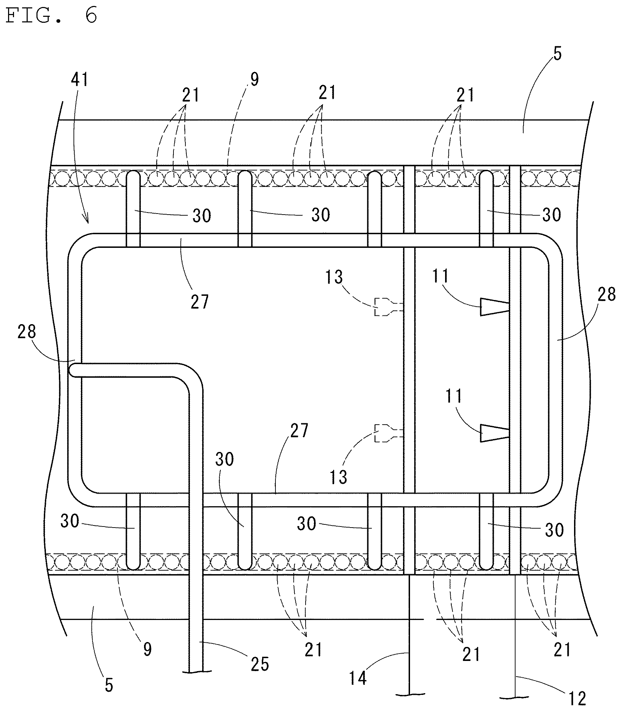

Fig. 6 shows another embodiment (second embodiment) of the pressurized fluid supply part of the scum peeling device. A pressurized fluid supply part 41 has a different planar shape from the pressurized fluid supply part 23 described above. In the pressurized fluid supply part 41, the same components as those of the pressurized fluid supply part 23 are denoted by the same reference numerals.

In the pressurized fluid supply part 41, the central connection pipe 29 provided in the first embodiment is eliminated, and the pressurized fluid supply part 41 is configured in a rectangular loop shape formed by the pair of long pipe portions 27 and the pair of short pipe portions 28. The branch pipe 25 from the pressurized fluid pipe 24 (refer to Fig. 1 and the like) connected to a pressurized fluid supply source (not shown) is connected to one short pipe portion 28 (in Fig. 6, the short pipe portion 28 on the right side).

Therefore, in this embodiment, the pressurized fluid is supplied from the branch pipe 25 to the short pipe portion 28, fills the loop-shaped pressurized fluid supply part 41 composed of the short pipe portion 28 and the long pipe portion 27, is sent to the pipe 9 via each connection pipe 30 of the long pipe portion 27, and is discharged from the discharge port member 21 of each pipe 9.

Since the pressurized fluid supply part 41 is also formed in a loop shape and the pressure inside the pressurized fluid supply part 41 is kept substantially uniform, substantially uniform compressed air is ejected from all the opening portions 22 of each pipe 9 connected to the pressurized fluid supply part 41. Therefore, the scum S can be effectively peeled off from each side wall 5 corresponding to the long pipe portion 27 of the pressurized fluid supply part 41 (where each pipe is provided adjacent thereto).

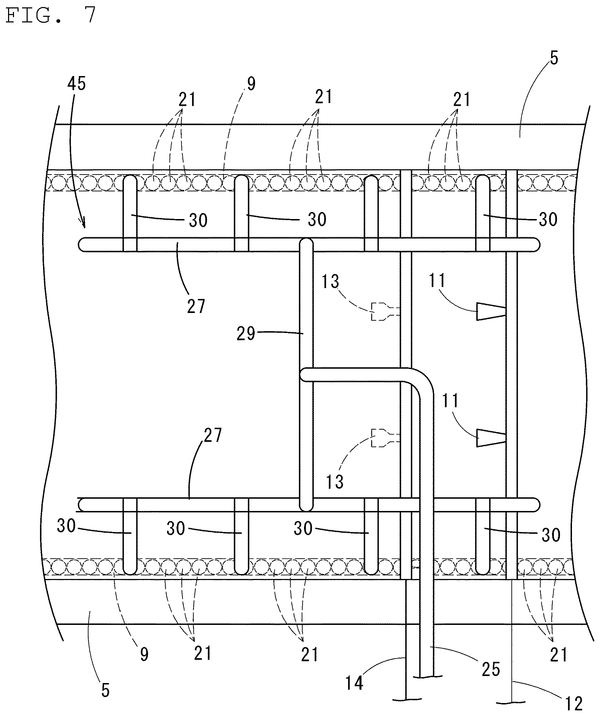

Fig. 7 shows still another embodiment (third embodiment) of the pressurized fluid supply part of the scum peeling device. A pressurized fluid supply part 45 does not have a loop shape. That is, in the pressurized fluid supply part 45, the short pipe portions 28 and 28 in the first embodiment are omitted, the pressurized fluid supply part 45 has the pair of long pipe portions 27 and 27 and the central connection pipe 29 that connects the intermediate positions in the length direction of the long pipe portions 27 and 27 to each other, and both end portions of both the long pipe portions 27 and 27 are closed. The branch pipe 25 from the pressurized fluid pipe 24 (refer to Fig. 1 and the like) connected to a pressurized fluid supply source (not shown) is connected to the central connection pipe 29.

Therefore, in this embodiment, the pressurized fluid is supplied from the branch pipe 25 to the central connection pipe 29, is sent from the central connection pipe 29 to the respective long pipe portions 27 and 27, is sent from the respective long pipe portions 27 and 27 to the respective pipes 9 through the plurality of connection pipes 30, and is discharged from the discharge port member 21 of each pipe 9.

In the pressurized fluid supply part 45, the same components as those of the pressurized fluid supply parts 23 and 41 are denoted by the same reference numerals.

The water conduit that includes the scum peeling device according to the present invention has been described in detail above with reference to the drawings. However, the specific configuration is not limited to the above-described embodiments, and design changes and the like can be made within a scope which does not depart from the gist of the present invention.

For example, in the examples described above, the scum peeling device is applied to the water conduit of the primary sedimentation pond of the sewage treatment plant. However, the scum peeling device can also be applied to the primary sedimentation pond or the final sedimentation pond of the sewage treatment plant. In a case of being applied to these sedimentation ponds, the pipes of the scum peeling device may be disposed on the inner surfaces of both side walls of the sedimentation pond. In addition, one or both of the water injection nozzle (above-water nozzle) 11 and the water injection nozzle (underwater nozzle) 13 can also be provided in these sedimentation ponds.

In addition, although an example in which compressed air is used as the pressurized fluid has been described, the pressurized fluid can also be pressurized water or gas-liquid mixed pressurized water.

In addition, the pressurized fluid supply part can adopt planar shapes other than those in the first embodiment (Fig. 4), the second embodiment (Fig. 6), and the third embodiment (Fig. 7). For example, the pressurized fluid supply part 23 shown in Fig. 4 may have a planar shape in which one of the short pipe portions 28 is omitted and which is composed of the pair of long pipe portions 27 and the short pipe portion connected to one end portion of each of the long pipe portions 27. In that case, one end portion of each of the long pipe portions 27 may be closed, and the branch pipe may be connected to the short pipe portion.

### Industrial Applicability

The scum peeling device according to the present invention can be suitably used for a water conduit and a primary sedimentation pond or a final sedimentation pond of a sewage treatment plant.

### Reference Signs List

1: water conduit
2: water conduit main body
3: scum bit
4: movable gate
6: sedimentation pond
7: inflow port
8: opening and closing gate
9: pipe
10: scum discharge device
11: water injection nozzle (above-water nozzle)
12: pressurized water supply pipe
13: water injection nozzle (underwater nozzle)
14: pressurized water supply pipe
20: scum peeling device
21: discharge port member
22: opening portion
23: pressurized fluid supply part
24: pressurized fluid pipe
25: branch pipe
26: flow rate regulating valve
27: long pipe portion
28: short pipe portion
29: central connection pipe
30: connection pipe
41: pressurized fluid supply part
45: pressurized fluid supply part

## Claims

1. A scum peeling device that peels off scum attached to an inner surface of a side wall of a water conduit through which raw water flows, the scum peeling device comprising:
a pair of pipes that extend along a flow direction of the raw water inside the side wall of the water conduit main body, have a plurality of opening portions provided at intervals in a length direction, and are provided to be located below the scum; and
a plurality of pressurized fluid supply parts that supply a pressurized fluid from a pressurized fluid supply source to the pipes,
wherein the pipe is divided into a plurality of regions each having a predetermined length along the flow direction of the raw water, each of the pressurized fluid supply parts is connected to each of the divided regions, and
the pressurized fluid is ejected from the opening portions of the pipes.

2. The scum peeling device according to Claim 1,
wherein the pressurized fluid supply part includes
a pair of long pipe portions that are disposed to face the pipes in parallel, and
a plurality of connection pipes that are provided at intervals in the length direction and connect the long pipe portions.

3. The scum peeling device according to Claim 2, further comprising:
a pair of short pipe portions that connect end portions of both long pipe portions to each other at both end portions of the long pipe portion,
wherein the long pipe portions and the short pipe portions are connected in a loop shape in the pressurized fluid supply part.

4. The scum peeling device according to Claim 2, further comprising:
a central connection pipe that connects midway positions in the length direction of the long pipe portions to each other,
wherein the pressurized fluid from the pressurized fluid supply source is supplied to the central connection pipe.

5. The scum peeling device according to Claim 4,
wherein the midway position in the length direction of the long pipe portion is an intermediate position in the length direction of the long pipe portion.

6. A water conduit comprising:
the scum peeling device according to any one of Claims 1 to 5; and
a water conduit main body,
wherein the side wall is a side wall of the water conduit main body, and
at least one of an above-water nozzle that injects pressurized water, which promotes a flow of scum produced on a water surface of the raw water downstream, from above the water, and an underwater nozzle that injects pressurized water, which promotes the flow of the scum downstream, in underwater is provided in a plurality in the water conduit main body.

7. The water conduit according to Claim 6,
wherein the water conduit main body includes a scum pit to which the scum on the water surface is discharged at a terminus position in the flow direction of the raw water, and an opening and closing gate that is openable to supply the raw water to a sedimentation pond at a position below the scum in the side wall.

8. A sedimentation pond comprising:
the scum peeling device according to any one of Claims 1 to 5,
wherein the side wall is a side wall of a water conduit main body.
